# EUROPEAN PATENT SPECIFICATION

(11) **EP 2 832 257 B1**
(45) Date of publication and mention of the grant of the patent: **27.06.2018**
(21) Application number: 13178865.5
(22) Date of filing: 01.08.2013
(51) Int. Cl.: A46B 3/16, A46B 7/10, A46B 9/02, B24D 13/06, B60S 3/06

(54) **Rotary brush construction for washing systems, particularly for washing vehicles**
Drehbürstenaufbau zum Waschen von Systemen, insbesondere für Waschfahrzeuge
Construction de brosse rotative pour systèmes de lavage, en particulier pour le lavage de véhicules

(43) Date of publication of application: 04.02.2015
(73) Proprietor: MORELITE S.p.A., 47899 Serravalle (SM)
(72) Inventor: Bernardi Pirini, Fernandino, 46018 Sabbioneta (MN) (IT)
(74) Representative: Negrini, Elena

(56) References cited:
- WO-A1-2008/032344
- ES-A1- 2 391 182
- JP-U- S61 181 527
- US-A1- 2003 172 479

## Description

### BACKGROUND OF THE INVENTION

The present invention relates to a rotary brush construction for washing systems, particularly for washing vehicles.

As is known, automatic motor-vehicle washing systems conventionally comprise washing brush assemblies. US20030172479 discloses the preamble of claim 1. Prior washing brush assemblies generally comprise a support tube coupled to a rotary element.

On an outer surface of the support tube are applied a plurality of flexible cleaning elements adjoining one another and coupled, at a respective end portion thereof, to said support tube, perpendicularly thereto.

The automatic cleaning and washing, for example of a motor-vehicle body, are carried out by rotatively driving the above disclosed washing brush assemblies, to cause the flexible elements thereof, held at a preset configuration by the centrifugal force generated by the rotary brush assemblies, to impact the vehicle body, through washing water and/or suitable washing water solutions or emulsions.

The above cleaning elements are made in different configurations, generally of polyethylene, in the form of threads or strips, fringes or straps.

Washing brushes made of brush straps usually comprise a plurality of strips or bands formed by partially cutting through the washing brush straps.

Said strips are arranged perpendicularly to the axis of the shaft thereon the washing brush straps are restrained.

The above disclosed straps are usually made of a foamed material and the clamping elements for clamping said straps to their support may comprise rivets, bars and so on.

A main problem of the above construction is that of properly clamping the straps to their support, to cause said straps to be neither excessively spaced away from one another nor excessively near one another.

A further problem is that of providing the clamping system with deforming characteristics, to prevent the strap base from being prematurely broken.

### SUMMARY OF THE INVENTION

Accordingly, the aim of the present invention is to provide such a washing system rotary washing brush construction overcoming the above mentioned prior art drawbacks.

Within the scope of the above mentioned aim, a main object of the invention is to provide such a washing brush construction providing an optimum distribution of the washing brush straps through the support tube surface.

Yet another object of the present invention is to provide such a washing brush construction which may be easily assembled.

Yet another object of the present invention is to provide such a washing brush construction which washing straps may be reliably clamped thereby preventing them from deteriorating or breaking, thereby providing a long duration washing brush strap assembly.

Yet another object of the present invention is to provide such a washing brush construction which, owing to its specifically designed structural features is very reliable and safe in operation.

According to one aspect of the present invention, the above mentioned aim and objects, as well as yet other objects, which will become more apparent hereinafter, are achieved by a washing system rotary washing brush construction, characterized in that said rotary washing brush construction comprises a rotary washing brush construction platform made of an elastic and/or flexible material, thereby said platform may be wound about a support tube.

Said platform comprises a plurality of recesses, each formed by a elliptical projection, having an inner base with at least two holes formed therethrough, an inlet and an outlet hole, for allowing a thread to pass therethrough.

In said seat, said thread encompasses and binds a folded flap of a strap element, thereby encompassing or threading it as a stitching arrangement and characterized in that said platform comprises a plurality of recesses arranged both with a longitudinal and a cross arrangement.

### BRIEF DESCRIPTION OF THE DRAWINGS

Further characteristics and advantages of the present invention will become more apparent from the following disclosure of a preferred, though not exclusive, embodiment of the invention, which is illustrated, by way of an indicative, but not limitative, example, in the accompanying drawings, where:

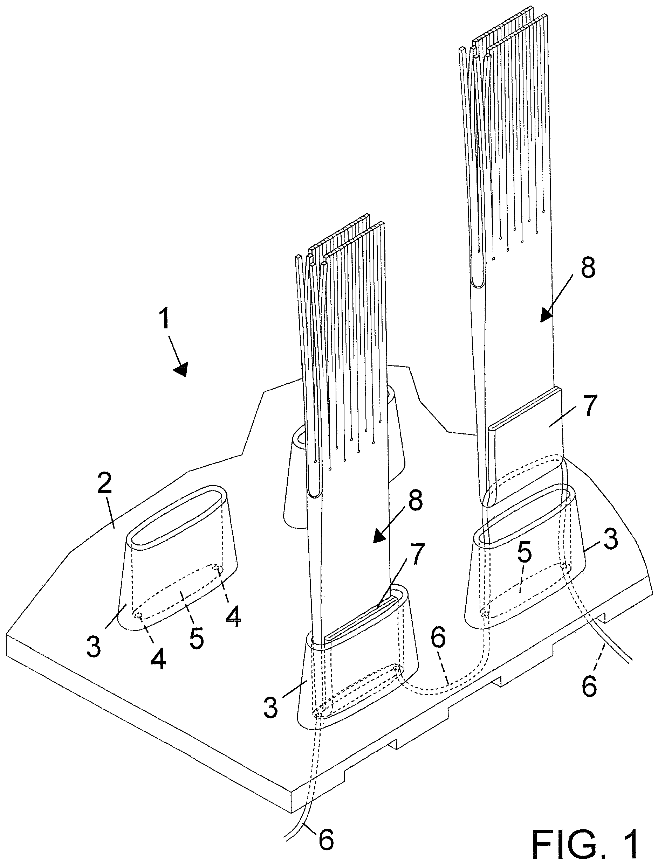

Figure 1 is a perspective view showing a portion of the rotary washing brush construction according to the present invention, in which a strap is shown in a position thereof partially withdrawn from its recess or seat;

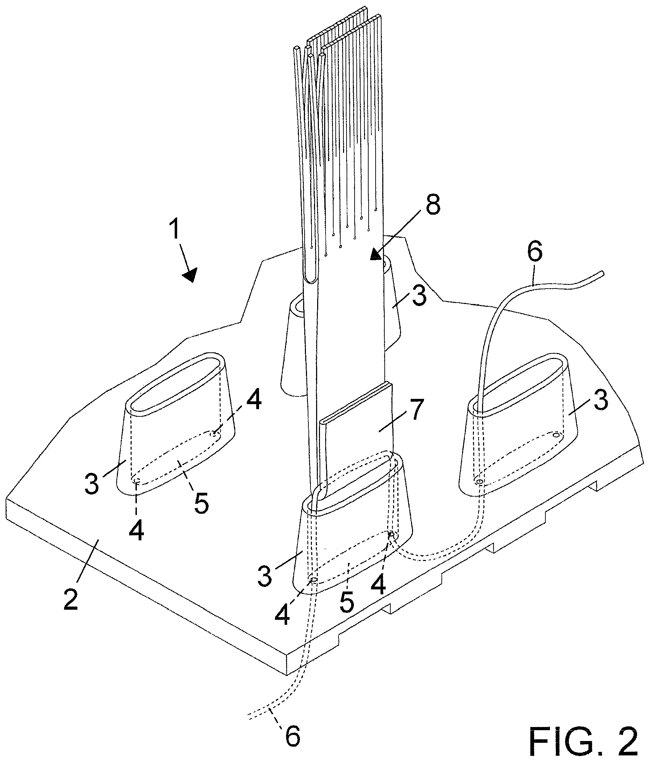

Figure 2 is a view similar to Figure 1, but showing the construction during the assembling operation thereof;

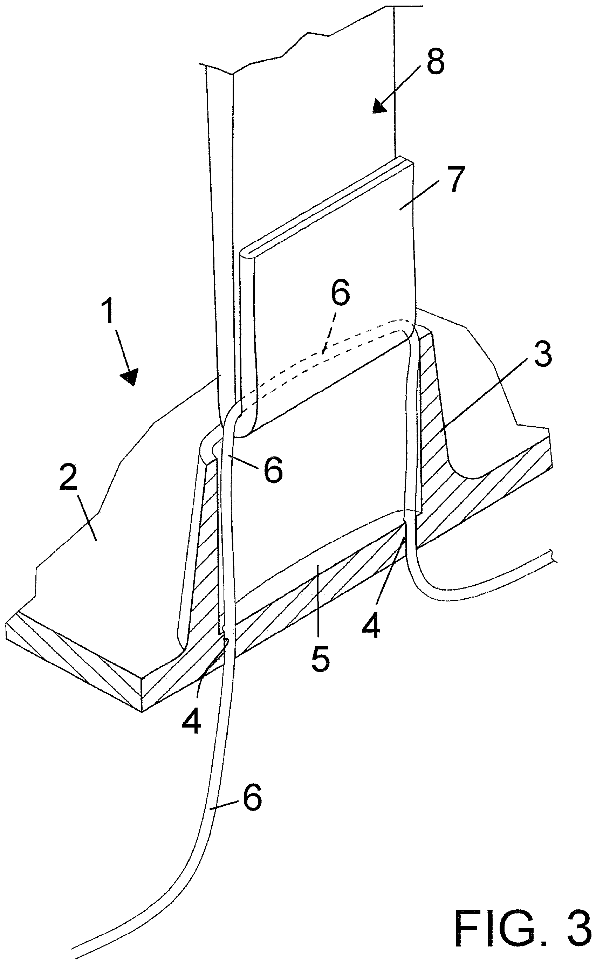

Figure 3 is a partially cross-sectioned perspective view of a recess or seat and a portion of the respective strap element;

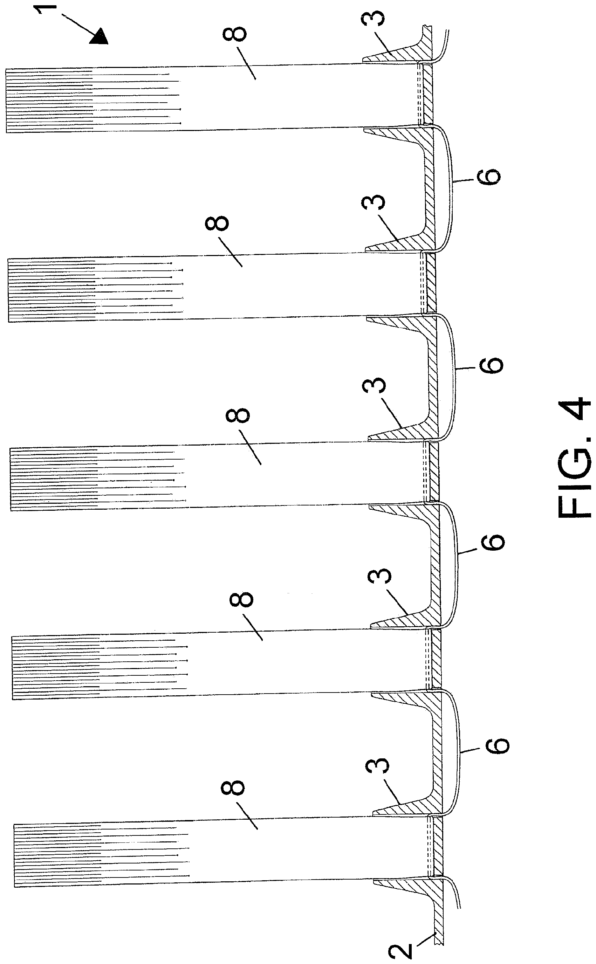

Figure 4 is a longitudinally cross-sectioned side elevation view of a portion of the rotary washing brush construction according to the present invention;
Figure 5 is a top plan view of an example of the elastic or resilient platform including a plurality of parallel recesses or seats disposed longitudinally with respect to the platform.;
Figure 6 is a top plan view of an example of the elastic or resilient platform including recesses or seats disposed diagonally with respect to the platform.;
Figure 7 is yet another top plan view of another example of the elastic or resilient platform, including a plurality of parallel recesses or seats disposed transversally with respect to the platform;
Figure 8 is yet another top plan view of an embodiment according to the invention of the resilient or elastic platform, including a plurality of combined recesses or seats disposed both longitudinally and transversally with respect to the platform;
Figure 9 is a further perspective partially see-through view showing a binding system for binding a strap element the thread of which in its recess or seat encompasses and binds a folded flap of the strap element, thereby encompassing it in two half elongated slots arrangement;
Figure 10 is a further perspective partially see-through view showing another binding system for binding a strap element having a band strap thread which, in its recess, engages a folded flap of the strap element, with a stitching arrangement.

### DESCRIPTION OF THE PREFERRED EMBODIMENTS

With reference to the number references of the above mentioned figures, the washing system rotary washing brush construction, particularly for washing vehicles, according to the present invention, which has been generally indicated by the reference number 1, comprises a platform 2, made of an elastic or resilient and/or flexible material, which may be wound about a support tube, not shown in the figures.

Said platform 2 comprises a plurality of recesses or seats 3, each including a barrel projection having an inner base or bottom 5 therethrough two holes 4 are formed, that is a thread 6 inlet hole and a thread outlet hole.

In said recesses 3, said thread 6 encompasses and binds a folded flap portion 7 of a strap element 8.

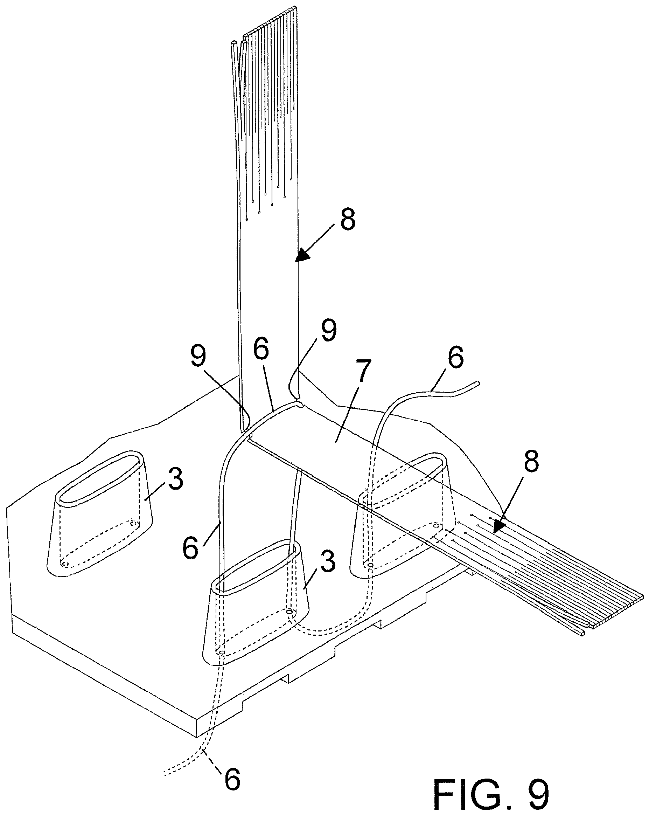

An advantageous binding system is shown in a detailed manner in Figure 9, showing that the thread 6 encompasses the folded flap portion 7 at suitable half slots 9, formed on the sides of the flap portion 7.

Said two elongated slots provide a perfectly sealed coupling while preventing one of the two flap portions from slipping outward, after having located it in its recess.

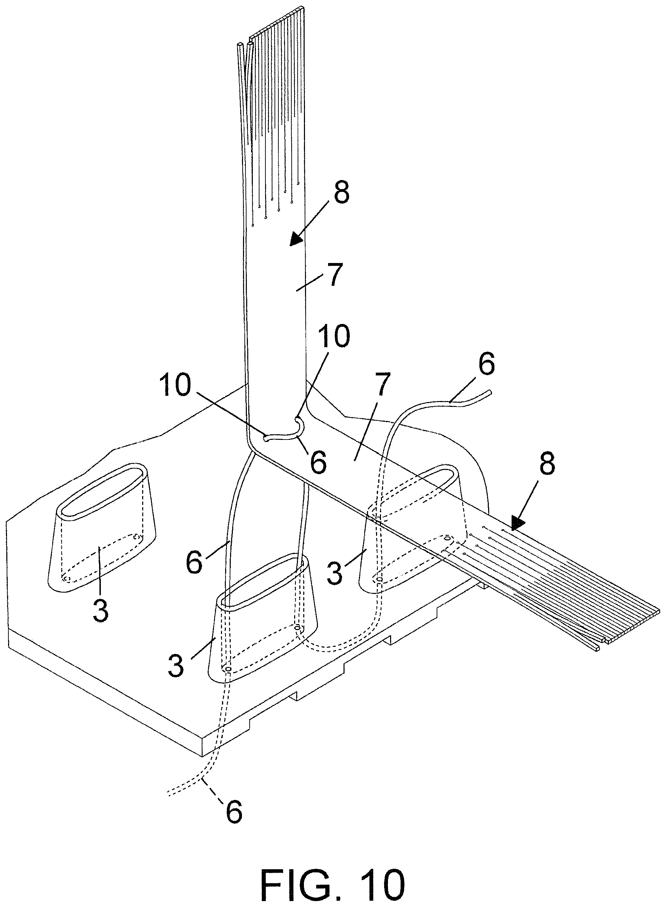

A further advantageous binding system is shown in a detailed manner in Figure 10, showing that the thread 6 enters the flap portion 7 and exits it through the holes 10, as a stitching arrangement.

In each said recess 3, said thread 6 enters and exits the inlet and outlet holes thereby restraining the strap element bottom without any tension and allowing, during the assembling operation, the operator to tension or stretch said thread without any risk of cutting or damaging the folded flap portion of the strap element.

In this connection it should be pointed out that the recesses or seats 3 are so shaped as to prevent any damages under a cutting stress, like on the contrary, it occurs in prior systems for clamping the strap element bottoms.

It has been found that the invention fully achieves the intended aim and objects.

In fact, the invention has provided a rotary washing brush construction which may be easily assembled and is very reliable in operation and has a long operating duration.

In fact, the flexible platform structure, with barrel recesses therein, allows to arrange the washing strap elements in several manners, according to requirements.

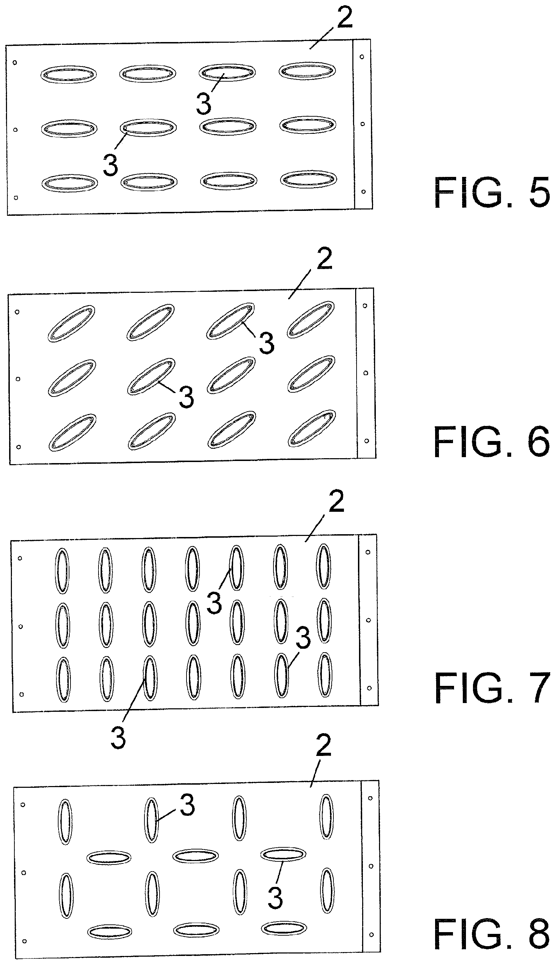

Figures 5-8 show only few of different possible arrangements for the strap element recesses.

## Claims

1. A rotary washing brush construction for a vehicle washing system, wherein said washing brush construction (1) comprises a platform (2), of an elastic and/or flexible material, adapted to be wound about a support tube, said platform comprising a plurality of recesses (3) each formed by a elliptical projection having an inner base therethrough at least two holes are formed, a thread inlet hole (4) and a thread outlet hole, for allowing a thread (6) to pass therethrough, in each said recess said thread encompassing and binding a folded flap portion (7) of a strap element (8), thereby encompassing said folded flap portion (7) or passing therethrough as a stitching arrangement; **characterised in that** said platform comprises a plurality of recesses arranged both with a longitudinal and a cross arrangement.

2. A rotary washing brush construction, according to claim 1, **characterized in that** in each said recess (3), said thread enters and exits through said inlet and outlet holes (4) thereby restraining the strap element bottom without tension, while allowing, in assembling said washing brush construction (1), an operator to tension or stretch said thread without a risk of cutting or damaging the folded flap portion of said strap element.

3. A rotary washing brush construction (1), according to claim 1, **characterized in that** said platform comprises a plurality of parallel recesses (3) which are arranged longitudinally with respect to the platform.

4. A rotary washing brush construction (1), according to claim 1, **characterized in that** said platform comprises a plurality of parallel recesses (3) arranged transversally with respect to the platform.

5. A rotary washing brush construction (1), according to claim 1, **characterized in that** said thread encompasses said folded flap portion at half slots (9) formed on side portions of said folded flap portion.

6. A rotary washing brush construction, according to claim 1, **characterized in that** said folded flap portion (7) is bound by a binding system including a binding thread entering and exiting said flap through holes (10) with a stitching arrangement, in each said recess said thread entering and exiting said inlet and outlet holes thereby allowing a band element bottom to be restrained without a tension stress in assembling said washing brush construction; said recess allowing an operator to stretch said thread without a risk of cutting or: damaging said folded flap portion of said strap element.

7. A rotary washing brush construction, according to claim 1, **characterized in that** said platform (2) comprises a plurality of outward projecting elongated recesses for precisely and firmly housing and restraining therein said folded flap (7) of said strap element.

## Patentansprüche

1. Eine drehbare Waschbürstenkonstruktion für ein Fahrzeug-Waschsystem, wobei die Waschbürstenkonstruktion (1) eine Plattform (2) aus einem elastischen und/oder flexiblen Material umfasst, das um ein Stützrohr gewickelt werden kann, wobei die Plattform eine Mehrzahl von Vertiefungen (3) umfasst, die jeweils durch einen elliptischen Vorsprung mit einer inneren Basis ausgebildet sind, durch die mindestens zwei Löcher ausgebildet sind, ein Fadeneinlassloch (4) und ein Fadenauslassloch, zum Durchführen eines Fadens (6), wobei der Faden in jeder der Vertiefungen einen gefalteten Laschenbereich (7) eines Streifenelements (8) umgibt und bindet und dadurch den gefalteten Laschenbereich (7) umgibt oder als eine Nahtanordnung durchläuft, **dadurch gekennzeichnet, dass** die Plattform eine Mehrzahl von Vertiefungen aufweist, die sowohl mit einer Längs- als auch einer Queranordnung angeordnet sind.

2. Eine drehbare Waschbürstenkonstruktion gemäß Anspruch 1, **dadurch gekennzeichnet, dass** der Faden in jeder der Vertiefungen (3) durch die Einlass- und Auslasslöcher (4) eintritt und austritt, wodurch der untere Teil des Streifenelements ohne Spannung befestigt wird, und einem Anwender beim Zusammenbau der Waschbürstenkonstruktion (1) ermöglicht wird, den Faden zu spannen oder zu dehnen, ohne dass eine Gefahr des Schneidens oder Beschädigens des gefalteten Laschenbereichs des Streifenelements besteht.

3. Eine drehbare Waschbürstenkonstruktion (1) gemäß Anspruch 1, **dadurch gekennzeichnet, dass** die Plattform eine Mehrzahl von parallelen Vertiefungen (3) aufweist, die in Längsrichtung zur Plattform angeordnet sind.

4. Eine drehbare Waschbürstenkonstruktion (1) gemäß Anspruch 1, **dadurch gekennzeichnet, dass** die Plattform eine Mehrzahl von parallelen Vertiefungen (3) aufweist, die quer zur Plattform angeordnet sind.

5. Eine drehbare Waschbürstenkonstruktion (1) gemäß Anspruch 1, **dadurch gekennzeichnet, dass** der Faden den gefalteten Laschenbereich an halben Schlitzen (9) umfasst, die an Seitenbereichen des gefalteten Laschenbereichs ausgebildet sind.

6. Eine drehbare Waschbürstenkonstruktion gemäß Anspruch 1, **dadurch gekennzeichnet, dass** der gefaltete Laschenbereich (7) durch ein Bindesystem gebunden ist, das einen Bindefaden umfasst, der in die Lasche durch Löcher (10) eintritt und austritt in einer Nahtanordnung, in jeder der Vertiefungen tritt der Faden in die Einlasslöcher ein und aus den Auslasslöchem aus, wodurch ein unterer Teil des Bandelements ohne Zugbelastung bei der Montage der Waschbürstenkonstruktion festgehalten werden kann; die Vertiefung ermöglicht es einem Anwender, den Faden zu dehnen, ohne dass eine Gefahr des Schneidens oder Beschädigens des gefalteten Laschenbereichs des Streifenelements besteht.

7. Eine drehbare Waschbürstenkonstruktion gemäß Anspruch 1, **dadurch gekennzeichnet, dass** die Plattform (2) eine Mehrzahl von nach außen vorstehenden länglichen Vertiefungen zur präzisen und festen Unterbringung und Fixierung des gefalteten Laschenbereichs (7) des Streifenelements darin aufweist.

## Revendications

1. Construction de brosse de lavage rotative pour un système de lavage de véhicule, ladite construction de brosse de lavage (1) comprenant une plate-forme (2), d'un matériau élastique et/ou flexible, apte à être enroulée autour d'un tube de support, ladite plate-forme comprenant une pluralité d'évidements (3) formés chacun par une saillie elliptique ayant une base interne à travers laquelle au moins deux trous sont formés, un trou d'entrée de fil (4) et un trou de sortie de fil, pour permettre à un fil (6) d'y passer à travers, dans chaque évidement ledit fil entourant et reliant une partie rabat plié (7) d'un élément bande (8), entourant ainsi ladite partie rabat plié (7) ou passant à travers celle-ci sous forme d'agencement de couture ;
**caractérisée par le fait que** ladite plate-forme comprend une pluralité d'évidements disposés avec à la fois un agencement longitudinal et un agencement transversal.

2. Construction de brosse de lavage rotative selon la revendication 1, **caractérisée par le fait que**, dans chaque évidement (3), ledit fil entre et sort à travers lesdits trous d'entrée et de sortie (4), retenant ainsi la partie inférieure de l'élément bande sans tension, tout en permettant, lors de l'assemblage de ladite construction de brosse de lavage (1), à un opérateur de tendre ou d'étirer ledit fil sans risquer de couper ou d'endommager la partie rabat plié dudit élément bande.

3. Construction de brosse de lavage rotative (1) selon la revendication 1, **caractérisée par le fait que** ladite plate-forme comprend une pluralité d'évidements parallèles (3) qui sont disposés longitudinalement par rapport à la plate-forme.

4. Construction de brosse de lavage rotative (1) selon la revendication 1, **caractérisée par le fait que** ladite plate-forme comprend une pluralité d'évidements parallèles (3) disposés transversalement par rapport à la plate-forme.

5. Construction de brosse de lavage rotative (1) selon la revendication 1, **caractérisée par le fait que** ledit fil entoure ladite partie rabat plié au niveau de demi-fentes (9) formées sur des parties latérales de ladite partie rabat plié.

6. Construction de brosse de lavage rotative selon la revendication 1, **caractérisée par le fait que** ladite partie rabat plié (7) est reliée par un système de liaison comprenant un fil de liaison entrant et sortant dudit rabat à travers des trous (10) avec un agencement de couture, dans chaque évidement ledit fil entrant et sortant desdits trous d'entrée et de sortie, permettant ainsi à une partie inférieure de l'élément bande d'être retenue sans contrainte de tension lors de l'assemblage de ladite construction de brosse de lavage ; ledit évidement permettant à un opérateur d'étirer ledit fil sans risquer de couper ou d'endommager ladite partie rabat plié dudit élément bande.

7. Construction de brosse de lavage rotative selon la revendication 1, **caractérisée par le fait que** ladite plate-forme (2) comprend une pluralité d'évidements allongés faisant saillie vers l'extérieur pour recevoir et retenir, précisément et fermement, à l'intérieur de ceux-ci, ledit rabat plié (7) dudit élément bande.
